# EUROPÄISCHE PATENTSCHRIFT

(11) **EP 3 226 334 B1**
(45) Veröffentlichungstag und Bekanntmachung des Hinweises auf die Patenterteilung: **24.07.2019**
(21) Anmeldenummer: 16163560.2
(22) Anmeldetag: 01.04.2016
(51) Int. Cl.: H01M 8/04089, H01M 8/0444, H01M 8/04746, H01M 8/0438

(54) **BRENNSTOFFZELLENSYSTEM UND VERFAHREN ZU SEINEM BETRIEB IN EINER AUSSENLUFTUNABHÄNGIGEN ANLAGE**
FUEL CELL SYSTEM AND METHOD FOR ITS OPERATION IN A SYSTEM INDEPENDENT FROM EXTERNAL AIR
SYSTÈMES DE PILES À COMBUSTIBLES ET SON PROCÉDÉ DE FONCTIONNEMENT DANS UNE INSTALLATION INDÉPENDANTE DE L'AIR EXTÉRIEUR

(43) Veröffentlichungstag der Anmeldung: 04.10.2017
(73) Patentinhaber: Siemens Aktiengesellschaft, 80333 München (DE)
(72) Erfinder: Brandt, Torsten, 91301 Forchheim (DE); Braunecker, Michael, 90491 Nürnberg (DE); Hoffmann, Joachim, 90559 Burgthann (DE); Lochner, Torsten, 91315 Höchstadt (DE); Mattejat, Arno, 91056 Erlangen (DE); Stühler, Walter, 96114 Hirschaid (DE)

(56) Entgegenhaltungen:
- EP-A1- 2 840 636
- DE-A1-102004 061 915
- DE-A1-102006 026 539
- FR-A1- 2 952 232
- US-A1- 2004 166 383
- US-A1- 2007 077 472
- US-A1- 2008 187 788

## Beschreibung

Die Erfindung betrifft ein Brennstoffzellensystem zum Betrieb in einer außenluftunabhängigen Anlage, mit einer Anzahl von Brennstoffzellen die zur Versorgung mit den Reaktanten Wasserstoff und Sauerstoff in zwei separate Gaskreisläufe der beiden Reaktanten geschaltet sind, wobei die Reaktanten jeweils über ein Versorgungsventil in den betreffenden Gaskreislauf einleitbar und aus diesem über ein Entsorgungsventil in die außenluftunabhängige Anlage ausleitbar sind, und mit einer Regeleinrichtung zur Regelung der Einleitung und Ausleitung der Reaktanten sowie ihrer Zirkulation in den Gaskreisläufen in Abhängigkeit von den gemessenen Gaskonzentrationen der Reaktanten in den Gaskreisläufen.

Die Erfindung betrifft ferner ein entsprechendes Verfahren zum Betrieb eines Brennstoffzellensystems in einer außenluftunabhängigen Anlage.

Ein derartiges System ist aus der WO2015024785 (A1) bekannt.

Brennstoffzellen ermöglichen eine emissionsfreie und geräuscharme Erzeugung elektrischer Energie, weswegen sie zunehmend in schwimmenden oder tauchenden Einrichtungen zur Erzeugung der dort benötigten elektrischen Energie zum Einsatz kommen. Beispiele für derartige schwimmende oder tauchende Einrichtungen sind Überwasserschiffe, Unterwasserschiffe (Unterseeboote), oder Offshore-Plattformen. So weisen beispielsweise viele moderne Unterseeboote einen außenluftunabhängigen Antrieb auf, bei dem Brennstoffzellen zusammen mit einer Batterie bei Tauchfahrt, einen elektrischen Propulsionsantrieb des Unterseebootes sowie sämtliche weiteren elektrischen Verbraucher mit elektrischer Energie versorgen. Bei Schnorchelfahrt oder im aufgetauchten Zustand erfolgt die Energieversorgung dagegen durch einen Dieselgenerator.

Die Brennstoffzellen werden dabei üblicherweise mit technisch reinem Wasserstoff und Sauerstoff als Reaktanten betrieben, die in den Brennstoffzellen zu Produktwasser abreagieren. Um die Menge von zu entsorgenden unverbrannten Restgasen zu minimieren und die Reaktanten optimal auszunutzen, werden in dem aus der oben genannten WO2015024785 (A1) bekannten Brennstoffzellensystem die beiden Reaktanten den Brennstoffzellen jeweils in einem Zirkulationsbetrieb zugeführt. Da die Reaktanten aus dem Herstellungsprozess je nach Reinheitsgrad einen geringen Anteil an Inertgasen enthalten, verringert sich aufgrund des Zirkulationsbetriebs zunehmend ihre Reinheit, so dass sie bei entsprechender Verunreinigung aus den Kreisläufen entfernt und durch frische Reaktanten ersetzt werden müssen. Bei dem bekannten Brennstoffzellensystem werden die Ausleitung von Reaktanten aus den Gaskreisläufen und die Einleitung frischer Reaktanten und ihre Zirkulation in den Gaskreisläufen in Abhängigkeit von gemessenen Konzentrationen der Reaktanten in den Gaskreisläufen geregelt. Dabei wird in jedem der beiden Gaskreisläufe mit abnehmender Konzentration des jeweiligen Reaktanten zunächst die Zirkulationsrate erhöht; wenn eine Minimalkonzentration des jeweiligen Reaktanten erreicht wird, wird ein Teil des Reaktanten als Restgas aus dem Gaskreislauf entsorgt und durch frischen Reaktanten ersetzt.

Während das sauerstoffhaltige Restgas in der Regel problemlos mit der Umgebungsluft gemischt werden kann, besteht bei dem wasserstoffhaltigen Restgas eine inhärente Brandgefahr. Wie in der DE102006026539 (A1) beschrieben, wird deshalb bei bekannten Brennstoffzellensystemen in außenluftunabhängigen Anlagen das wasserstoffhaltige Restgas mit Hilfe einer Leitung in einen ungefährdeten Bereich der Anlage geführt und erst dort in die Umgebungsluft abgelassen. Bei dem ungefährdeten Bereich handelt es sich beispielsweise um einen Bereich in Überkopfhöhe des Betriebspersonals des Brennstoffzellensystems. Da in der Nähe des Restgasauslasses jedoch immer eine brennbare Gasmischung vorhanden ist, ist es bekannt, die Umgebungsluft mit Hilfe eines Lüfters durch einen katalytischen Reaktor zu zirkulieren, in dem der Wasserstoff mit dem Sauerstoff in Wasser umgesetzt wird, so dass zündfähige Gemische in der Umgebungsluft verhindert werden. Um eine Entsorgung des wasserstoffhaltigen Restgases ohne Brandgefahr auch ohne Einsatz eines katalytischen Reaktors ermöglichen, wird in der genannten DE102006026539 (A1) vorgeschlagen, das wasserstoffhaltige Restgas mit dem sauerstoffhaltigen Restgas zu vermischen, bevor es in die Umgebungsluft des Brennstoffzellensystems eingeleitet wird. In dem Gasgemisch aus den beiden Restgasen wird die Konzentration des Wasserstoffes auf Überschreitung eines Grenzwertes überwacht. Der Grenzwert kann dann beispielsweise entsprechend der unteren Zündgrenze, ggf. mit einem zusätzlichen Sicherheitsabstand, gewählt werden. Wird der vorgegebene Grenzwert überschritten, kann die Wasserstoffzufuhr zu dem Brennstoffzellensystem unterbrochen werden. Alternativ oder als erster Schritt kann der Anteil des sauerstoffhaltigen Restgases in dem Gasgemisch erhöht werden, indem z. B. die Luft- oder Sauerstoffzufuhr zu dem Brennstoffzellensystem erhöht wird.

Der Erfindung liegt die Aufgabe zugrunde, bei einem Brennstoffzellensystem, in dem die Reaktanten Wasserstoff und Sauerstoff in separat geregelten Gaskreisläufen zirkulieren, die Regelung der Restgasausbringung auf die Randbedingungen innerhalb einer geschlossenen außenluftunabhängigen Anlage abzustimmen, wie sie z. B. ein Unterseeboot bei Tauchfahrt darstellt.

Gemäß der Erfindung wird die Aufgabe durch das in Anspruch 1 angegebene Brennstoffzellensystem oder das in Anspruch 5 angegebene Verfahren gelöst.

Vorteilhafte Weiterbildungen des erfindungsgemäßen Brennstoffzellensystems bzw. Verfahrens sind den Unteransprüchen zu entnehmen.

Gegenstand der Erfindung ist somit ein Brennstoffzellensystem zum Betrieb in einer außenluftunabhängigen Anlage, mit einer Anzahl von Brennstoffzellen die zur Versorgung mit den Reaktanten Wasserstoff und Sauerstoff in zwei separate Gaskreisläufe geschaltet sind, in denen die Reaktanten unabhängig voneinander durch Pumpen getrieben zirkulieren, wobei sie über Versorgungsventile in die Gaskreisläufe einleitbar und aus diesen über Entsorgungsventile in die außenluftunabhängigen Anlage ausleitbar sind, und mit einer Regeleinrichtung die in Abhängigkeit von gemessenen Konzentrationen der Reaktanten in den Gaskreisläufen Stelleingriffe an den Versorgungsventilen, den Entsorgungsventilen und den Pumpen vornimmt, dadurch gekennzeichnet, dass an der Regeleinrichtung Sensoren zur Messung der Konzentrationen der beiden Reaktanten in der außenluftunabhängigen Anlage angeschlossen sind und dass die Regeleinrichtung dazu ausgebildet ist, die Stelleingriffe an den Entsorgungsventilen in Abhängigkeit von Messwerten der Sensoren zu modifizieren, um die Ausleitungsmenge eines der beiden Reaktanten zu verringern, wenn seine Konzentration in der außenluftunabhängigen Anlage eine vorgegebene Obergrenze überschreitet, oder die Ausleitungsmengen beider Reaktanten zu verringern, wenn ihre Konzentrationen in der in der außenluftunabhängigen Anlage vorgegebene Obergrenzen überschreiten.

Eine unmittelbare Modifikation der Stelleingriffe an den Entsorgungsventilen stellt z. B. die Stellgrößenbegrenzung dar. Es ist aber auch möglich, durch Änderung der Sollwerte oder Grenzwerte für die Gaskonzentrationen der Reaktanten in den Gaskreisläufen die Stelleingriffe an den Entsorgungsventilen zu modifizieren.

In vorteilhafter Weise wird zusätzlich zu den Konzentrationen der beiden Reaktanten auch der Druck in der außenluftunabhängigen Anlage gemessen, wobei über die Stelleingriffe an den Entsorgungsventilen zusammen mit der Verringerung der Ausleitungsmenge des einen Reaktanten die Ausleitungsmenge des anderen Reaktanten erhöht wird, wenn dessen Konzentration in der außenluftunabhängigen Anlage den für ihn vorgegebenen Schwellenwert unterschreitet und der gemessene Druck einen vorgegebenen Grenzwert unterschreitet. Dadurch wird der Reaktant, dessen Konzentration in der außenluftunabhängigen Anlage die Obergrenze überschreitet, weiter verdünnt bzw. es erhöht sich die Gasmenge beider Reaktanten, die in einem in der außenluftunabhängigen Anlage angeordneten katalytischen Rekombinator abreagieren kann.

Wenn die in der außenluftunabhängigen Anlage gemessene Sauerstoff-Konzentration eine vorgegebene Untergrenze unterschreitet, wird die Ausleitungsmenge des sauerstoffhaltigen Restgases erhöht. Wenn diese Maßnahme nicht ausreicht und die Wasserstoff-Konzentration unter der vorgegebenen Obergrenze liegt, kann zusätzlich die Ausleitungsmenge des wasserstoffhaltigen Restgases verringert werden. Die Verringerung des wasserstoffhaltigen Restgases verringert ebenso die abreagierende Gasmenge der beiden Reaktanten und erhöht somit ebenso die Sauerstoff-Konzentration.

Zur weiteren Erläuterung der Erfindung wird im Folgenden auf die Figuren der Zeichnung Bezug genommen; im Einzelnen zeigen jeweils in schematischer Darstellung:
- Fig. 1: ein Ausführungsbeispiel des erfindungsgemäßen Brennstoffzellensystems und
- Fig. 2: ein Beispiel für die Restgasausbringung in Abhängigkeit von den in der außenluftunabhängigen Umgebung gemessenen Gaskonzentrationen und dem Umgebungsdruck.

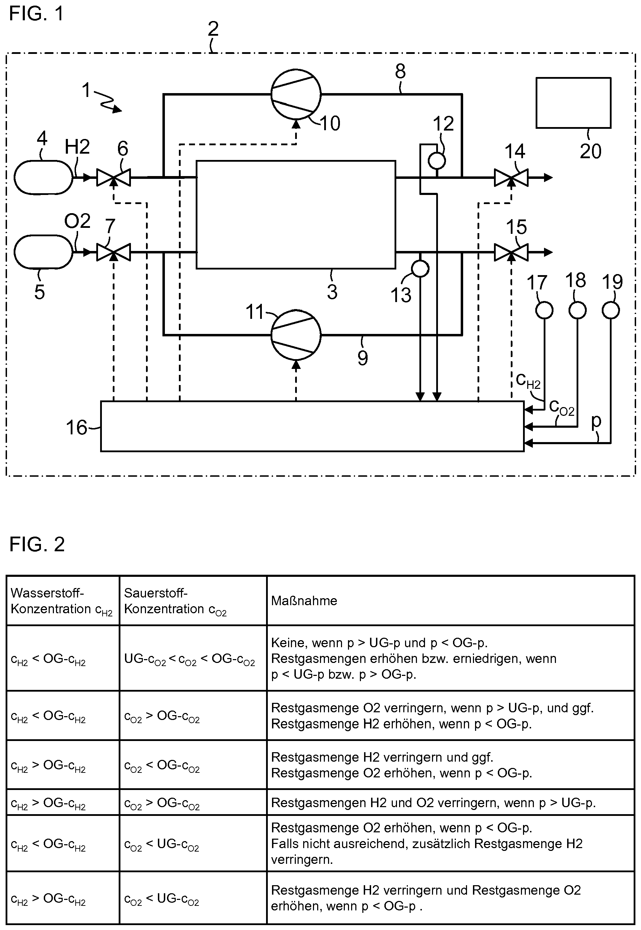

Fig. 1 zeigt schematisch ein Brennstoffzellensystem 1 in einer außenluftunabhängigen Anlage 2. Das Brennstoffzellensystem 1 weist eine Brennstoffzelle oder einen oder mehrere Stapel von Brennstoffzellen 3 auf, die aus Druckbehältern 4, 5 und über steuerbare Versorgungsventile 6, 7 mit den Reaktanten Wasserstoff H2 und Sauerstoff O2 versorgt werden. Die Brennstoffzellen 3 sind in zwei separate Gaskreisläufe 8, 9 geschaltet, in denen die Reaktanten H2, O2 unabhängig voneinander durch steuerbare Pumpen (Verdichter, Gebläse etc.) 10, 11 getrieben zirkulieren. In den Brennstoffzellen 3 wird ein Teil der Reaktanten H2, O2 zu Wasser umgesetzt, wobei die nicht umgesetzten Anteile den Brennstoffzellen 3, ggf. zusammen mit frischen Reaktanten H2, O2, erneut zugeführt werden.

Aufgrund dieses Zirkulationsbetriebs der Reaktanten H2, O2 erhöht sich im Laufe der Zeit deren anfänglich sehr geringer Intertgasanteil, was einer Abnahme der Konzentrationen der Reaktanten H2, O2 in den Gaskreisläufen 8, 9 entspricht. Die Konzentrationen der Reaktanten H2, O2 in den Gaskreisläufen 8, 9 werden mit Gassensoren 12, 13 gemessen. Zusätzlich können, was hier nicht gezeigt ist, die Drücke und ggf. Temperaturen in den Gaskreisläufen 8, 9 und die Brennstoffzellenspannungen gemessen werden. Die Entsorgung der Reaktanten H2, O2 erfolgt über Entsorgungsventile 14, 15 in Abhängigkeit von der gemessenen Konzentration. Dazu werden die Entsorgungsventile 14, 15 und weiterhin auch die Versorgungsventile 6, 7 und die Pumpen 10, 11 von einer Regeleinrichtung 16 angesteuert, die von den Gassensoren 12, 13 gelieferte Messwerte erhält. Beispielsweise wird, wie in der WO2015024785 (A1) beschrieben, in jedem der beiden Gaskreisläufe 8, 9 mit abnehmender Konzentration des jeweiligen Reaktanten H2, O2 zunächst die Zirkulationsrate erhöht. Wenn schließlich eine Minimalkonzentration des jeweiligen Reaktanten, z. B. H2, unterschritten wird, wird ein Teil des Reaktanten H2 als Restgas aus dem betreffenden Gaskreislauf 10 entsorgt und durch frischen Reaktanten H2 aus dem Druckspeicher 4 ersetzt.

An der Regeleinrichtung 16 sind zusätzlich Sensoren 17, 18, 19 angeschlossen, die die Wasserstoff-Konzentration c_{H2}, die Sauerstoff-Konzentration c_{O2} sowie den Umgebungsdruck p in der außenluftunabhängigen Anlage 2 messen.

Ein in der außenluftunabhängigen Anlage 2 angeordneter katalytischer Rekombinator 20 setzt in der Umgebungsluft enthaltenen den Wasserstoff flammlos zu Wasserdampf um.

Fig. 2 zeigt beispielhaft, wie in Abhängigkeit von den Messwerten der Sensoren 17, 18, 19 die Stelleingriffe an den Entsorgungsventilen 14, 15 modifiziert werden. Dabei wird die Ausleitungsmenge des wasserstoffhaltigen und/oder des sauerstoffhaltigen Restgases verringert, wenn die Wasserstoff-Konzentration c_{H2} bzw. die Sauerstoff-Konzentration c_{O2} in der außenluftunabhängigen Anlage 2 eine vorgegebene Obergrenze OG-c_{H2} bzw. OG-c_{O2} überschreitet. Wenn der Druck p einen vorgegebenen Grenzwert OG-p unterschreitet und nur die Konzentration eines der beiden Reaktanten, z. B. Wasserstoff, die Obergrenze OG-c_{H2} überschreitet, wird die Ausleitung des jeweils anderen Reaktanten, in diesem Fall Sauerstoff, erhöht, so dass die Wasserstoff-Konzentration in der Umgebungsluft verdünnt wird. Im Falle eines Sauerstoffüberschusses wird durch Erhöhung der Ausleitung der wasserstoffhaltigen Restgases in die Anlage 2 die in dem Rekombinator 20 abreagierende Menge von Wasserstoff und Sauerstoff erhöht. Schließlich wird die Ausleitungsmenge des sauerstoffhaltigen Restgases erhöht, wenn die Sauerstoff-Konzentration c_{O2} in der außenluftunabhängigen Anlage 2 eine vorgegebene Untergrenze UG-c_{O2} unterschreitet. Falls diese Maßnahme nicht ausreicht, kann zusätzlich die Ausleitungsmenge des wasserstoffhaltigen Restgases verringert werden. Ziel aller Maßnahmen ist, dass in der außenluftabhängigen Anlage 2 wenig Wasserstoff (c_{H2} < OG-c_{H2}) und genügend Sauerstoff (UG-c_{O2} < c_{O2} < OG-c_{O2}) bei ausreichendem Druck (UG-p < p < OG-p) vorhanden ist. In den übrigen Fällen bleiben die Stelleingriffe an den Entsorgungsventilen 14, 15 unbeeinflusst (keine Maßnahme) bzw. es werden die Restgasmengen verringert oder erhöht, wenn der Druck p den Grenzwert OG-p überschreitet bzw. einen unteren Grenzwert UGp unterschreitet.

## Patentansprüche

1. Brennstoffzellensystem (1) zum Betrieb in einer außenluftunabhängigen Anlage (2), mit einer Anzahl von Brennstoffzellen (3) die zur Versorgung mit den Reaktanten Wasserstoff (H2) und Sauerstoff (O2) in zwei separate Gaskreisläufe (8, 9) geschaltet sind, in denen die Reaktanten (H2, O2) unabhängig voneinander durch Pumpen (10, 11) getrieben zirkulieren, wobei sie über Versorgungsventile (6, 7) in die Gaskreisläufe (8, 9) einleitbar und aus diesen über Entsorgungsventile (14, 15) in die außenluftunabhängigen Anlage (2) ausleitbar sind, und mit einer Regeleinrichtung (16) die in Abhängigkeit von gemessenen Konzentrationen der Reaktanten (H2, O2) in den Gaskreisläufen (8, 9) Stelleingriffe an den Versorgungsventilen (6, 7), den Entsorgungsventilen (14, 15) und den Pumpen (10, 11) vornimmt, **dadurch gekennzeichnet, dass** an der Regeleinrichtung (16) Sensoren (17, 18) zur Messung der Konzentrationen (c_{H2}, c_{O2}) der beiden Reaktanten (H2, O2) in der außenluftunabhängigen Anlage (2) angeschlossen sind und dass die Regeleinrichtung (16) dazu ausgebildet ist, die Stelleingriffe an den Entsorgungsventilen (14, 15) in Abhängigkeit von Messwerten der Sensoren (17, 18) zu modifizieren, um die Ausleitungsmenge eines der beiden Reaktanten (z. B. H2) zu verringern, wenn seine Konzentration (c_{H2}) in der in der außenluftunabhängigen Anlage (2) eine vorgegebene Obergrenze (OG-c_{H2}) überschreitet, oder die Ausleitungsmengen beider Reaktanten (H2, O2) zu verringern, wenn ihre Konzentrationen (c_{H2}, c_{O2}) in der in der außenluftunabhängigen Anlage (2) vorgegebene Obergrenzen (OG-c_{H2}, OG-c_{O2}) überschreiten.

2. Brennstoffzellensystem (1) nach Anspruch 1, **dadurch gekennzeichnet, dass** an der Regeleinrichtung (16) zusätzlich ein Drucksensor (19) zur Messung des Drucks (p) in der außenluftunabhängigen Anlage (2) angeschlossen ist und dass die Regeleinrichtung (16) ferner dazu ausgebildet ist, die Stelleingriffe an den Entsorgungsventilen (14, 15) zusätzlich in Abhängigkeit von Messwerten des Drucksensors (19) zu modifizieren, um zusammen mit der Verringerung der Ausleitungsmenge des einen Reaktanten (z. B. H2) die Ausleitungsmenge des anderen Reaktanten (O2) zu erhöhen, wenn dessen Konzentration (c_{O2}) in der außenluftunabhängigen Anlage (2) den für ihn vorgegebenen Schwellenwert (OG-c_{O2}) unterschreitet und der gemessene Druck (p) einen vorgegebenen Grenzwert (OG-p) unterschreitet.

3. Brennstoffzellensystem (1) nach Anspruch 2, **dadurch gekennzeichnet, dass** die Regeleinrichtung (16) weiter dazu ausgebildet ist, die Stelleingriffe an den Entsorgungsventilen (14, 15) weiterhin zu modifizieren, um die Ausleitungsmenge des Reaktanten Sauerstoff (O2) zu erhöhen, wenn seine Konzentration (c_{O2}) in der außenluftunabhängigen Anlage (2) eine vorgegebene Untergrenze (UG-c_{O2}) unterschreitet.

4. Brennstoffzellensystem (1) nach Anspruch 3, **dadurch gekennzeichnet, dass** zusätzlich die Ausleitungsmenge des Reaktanten Wasserstoff (H2) verringert wird.

5. Verfahren zum Betrieb eines Brennstoffzellensystems (1) in einer außenluftunabhängigen Anlage (2), wobei eine Anzahl von Brennstoffzellen (3) mit den Reaktanten Wasserstoff (H2) und Sauerstoff (O2) in zwei separaten Gaskreisläufen (8, 9) versorgt werden, in denen die Reaktanten (H2, O2) unabhängig voneinander durch Pumpen (10, 11) getrieben zirkulieren, wobei sie über Versorgungsventile (6, 7) in die Gaskreisläufe (8, 9) eingeleitet und aus diesen über Entsorgungsventile (14, 15) in die außenluftunabhängigen Anlage (2) ausgeleitet werden, und wobei mittels einer Regeleinrichtung (16) in Abhängigkeit von gemessenen Konzentrationen der Reaktanten (H2, O2) in den Gaskreisläufen (8, 9) Stelleingriffe an den Versorgungsventilen (6, 7), den Entsorgungsventilen (14, 15) und den Pumpen (10, 11) vorgenommen werden, **dadurch gekennzeichnet, dass** die Konzentrationen der beiden Reaktanten (H2, O2) in der außenluftunabhängigen Anlage (2) gemessen werden und die Stelleingriffe an den Entsorgungsventilen (14, 15) in Abhängigkeit von den gemessenen Konzentrationen der beiden Reaktanten (H2, O2) in der außenluftunabhängigen Anlage (2) modifiziert werden, um die Ausleitungsmenge eines der beiden Reaktanten (z. B. H2) zu verringern, wenn seine Konzentration (c_{H2}) in der in der außenluftunabhängigen Anlage (2) eine vorgegebene Obergrenze (OG-c_{H2}) überschreitet, oder die Ausleitungsmengen beider Reaktanten (H2, O2) zu verringern, wenn ihre Konzentrationen (c_{H2}, c_{O2}) in der in der außenluftunabhängigen Anlage (2) vorgegebene Obergrenzen (OG-c_{H2}, OG-c_{O2}) überschreiten.

6. Verfahren nach Anspruch 5, **dadurch gekennzeichnet, dass** zusätzlich der Druck in der außenluftunabhängigen Anlage (2) gemessen wird und die Stelleingriffe an den Entsorgungsventilen (14, 15) zusätzlich in Abhängigkeit von dem gemessenen Druck (p) modifiziert werden, um zusammen mit der Verringerung der Ausleitungsmenge des einen Reaktanten (z. B. H2) die Ausleitungsmenge des anderen Reaktanten (O2) zu erhöhen, wenn dessen Konzentration (c_{O2}) in der in der außenluftunabhängigen Anlage (2) den für ihn vorgegebenen Schwellenwert (OG-c_{O2}) unterschreitet und der gemessene Druck (p) einen vorgegebenen Grenzwert (OG-p) unterschreitet.

7. Verfahren nach Anspruch 6, **dadurch gekennzeichnet, dass** die Stelleingriffe an den Entsorgungsventilen (14, 15) weiterhin modifiziert werden, um die Ausleitungsmenge des Reaktanten Sauerstoff (O2) zu erhöhen, wenn seine Konzentration (c_{O2}) in der außenluftunabhängigen Anlage (2) eine vorgegebene Untergrenze (UG-c_{O2}) unterschreitet.

8. Verfahren nach Anspruch 7, **dadurch gekennzeichnet, dass** zusätzlich die Ausleitungsmenge des Reaktanten Wasserstoff (H2) verringert wird.

## Claims

1. Fuel cell system (1) for operation in an air-independent installation (2), with a number of fuel cells (3) which, for supply with the reactants hydrogen (H2) and oxygen (O2), are connected into two separate gas circuits (8, 9), in which the reactants (H2, O2) circulate independently of one another, driven by pumps (10, 11), wherein they can be introduced into the gas circuits (8, 9) via supply valves (6, 7) and discharged therefrom via discharge valves (14, 15) into the air-independent installation (2), and with a regulation device (16) which carries out control actions on the supply valves (6, 7), the discharge valves (14, 15) and the pumps (10, 11) as a function of measured concentrations of the reactants (H2, O2) in the gas circuits (8, 9), **characterised in that** sensors (17, 18) for measuring the concentrations (c_{H2}, c_{O2}) of the two reactants (H2, O2) in the air-independent installation (2) are connected to the regulation device (16), and that the regulation device (16) is configured to modify the control actions on the discharge valves (14, 15) as a function of measured values of the sensors (17, 18), in order to reduce the discharge quantities of one of the two reactants (e.g. H2) if its concentration (c_{H2}) in the air-independent installation (2) exceeds a predetermined upper limit (OG-c_{H2}), or to reduce the discharge quantities of both reactants (H2, O2) if their concentrations (c_{H2}, c_{O2}) in the air-independent installation (2) exceed predetermined upper limits (OG-c_{H2}, OG-c_{O2}).

2. Fuel cell system (1) according to claim 1, **characterised in that** in addition a pressure sensor (19) for measuring the pressure (p) in the air-independent installation (2) is connected to the regulation device (16), and that the regulation device (16) is further configured to modify the control actions on the discharge valves (14, 15) in addition as a function of measured values of the pressure sensor (19), in order, together with the reduction of the discharge quantity of the one reactant (e.g. H2), to increase the discharge quantity of the other reactant (O2), if the concentration thereof (c_{O2}) in the air-independent installation (2) falls below the threshold value (OG-c_{O2}) predetermined therefor and the measured pressure (p) falls below a predetermined limit value (OG-p).

3. Fuel cell system (1) according to claim 2, **characterised in that** the regulation device (16) is further configured to furthermore modify the control actions on the discharge valves (14, 15), in order to increase the discharge quantity of the reactant oxygen (O2) if its concentration (c_{O2}) in the air-independent installation (2) falls below a predetermined lower limit (UG-c_{O2}).

4. Fuel cell system (1) according to claim 3, **characterised in that** in addition the discharge quantity of the reactant hydrogen (H2) is reduced.

5. Method for the operation of a fuel cell system (1) in an air-independent installation (2), wherein a number of fuel cells (3) are supplied with the reactants hydrogen (H2) and oxygen (O2) in two separate gas circuits (8, 9), in which the reactants (H2, O2) circulate independently of one another, driven by pumps (10, 11), wherein they are introduced into the gas circuits (8, 9) via supply valves (6, 7) and are discharged therefrom via discharge valves (14, 15) into the air-independent installation (2), and wherein control actions are carried out on the supply valves (6, 7), the discharge valves (14, 15) and the pumps (10, 11) by means of a regulation device (16) as a function of measured concentrations of the reactants (H2, O2) in the gas circuits (8, 9), **characterised in that** the concentrations of the two reactants (H2, O2) are measured in the air-independent installation (2) and the control actions on the discharge valves (14, 15) are modified as a function of the measured concentrations of the two reactants (H2, O2) in the air-independent installation (2), in order to reduce the discharge quantity of one of the two reactants (e.g. H2), if its concentration (c_{H2}) in the air-independent installation (2) exceeds a predetermined upper limit (OG-c_{H2}), or to reduce the discharge quantities of the two reactants (H2, O2) if their concentrations (c_{H2}, c_{O2}) in the air-independent installation (2) exceed predetermined upper limits (OG-c_{H2}, OG-c_{O2}).

6. Method according to claim 5, **characterised in that** the pressure in the air-independent installation (2) is additionally measured and the control actions on the discharge valves (14, 15) are modified in addition as a function of the measured pressure (p) in order, together with the reduction of the discharge quantity of the one reactant (e.g. H2), to increase the discharge quantity of the other reactant (O2) if the concentration thereof (c_{O2}) in the air-independent installation (2) exceeds the threshold value (OG-c_{O2}) predetermined for it and the measured pressure (p) falls below a predetermined limit value (OG-p).

7. Method according to claim 6, **characterised in that** the control actions on the discharge valves (14, 15) are furthermore modified, in order to increase the discharge quantity of the reactant oxygen (O2) if its concentration (c_{O2}) in the air-independent installation (2) falls below a predetermined lower limit (UG-c_{O2}).

8. Method according to claim 7, **characterised in that** in addition the discharge quantity of the reactant hydrogen (H2) is reduced.

## Revendications

1. Système (1) de piles à combustible pour le fonctionnement dans une installation (2) indépendante de l'air extérieur, comprenant un certain nombre de piles (3) qui, pour l'alimentation en les réactifs hydrogène (H2) et oxygène (O2), sont montées en deux circuits (8, 9) distincts pour du gaz, dans lesquels les réactifs (H2, O2) circulent en étant véhiculés indépendamment l'un de l'autre par des pompes (10, 11) en pouvant entrer dans les circuits pour gaz par des vannes (6, 7) d'alimentation et sortir de celles-ci dans l'installation (2) indépendante de l'air extérieur par des vannes (14, 15) d'évacuation, et comprenant un dispositif (16) de réglage, qui, en fonction de concentrations mesurées des réactifs (H2, O2) dans les circuits (8, 9) pour des gaz, effectue des interventions de réglage sur les vannes (6, 7) d'alimentation, les vannes (14, 15) d'évacuation et les pompes (10, 11), **caractérisé en ce qu'**au dispositif (16) de réglage, sont raccordés des capteurs (17, 18) de mesure des concentrations (c_{H2}, c_{O2}) des deux réactifs (H2, O2) dans l'installation (2) indépendante de l'air extérieur et **en ce que** le dispositif (16) de réglage est constitué de manière à modifier les interventions de réglage sur les vannes (14, 15) d'évacuation en fonction de valeurs de mesure des capteurs (17, 18), afin de diminuer la quantité évacuée de l'un des deux réactifs (par exemple, H2), si sa concentration (c_{H2}), dans l'installation (2) indépendante de l'air extérieur, dépasse une limite (OG-c_{H2}) supérieure donnée à l'avance, ou afin de diminuer les quantités évacuées des deux réactifs (H2, O2), si leurs concentrations (c_{H2}, c_{O2}), dans l'installation (2) indépendante de l'air extérieur, dépassent les limites (OG-c_{H2}, OG-c_{O2}) supérieures données à l'avance.

2. Système (1) de piles à combustible suivant la revendication 1, **caractérisé en ce qu'**au dispositif (16) de réglage, est raccordé, en outre, un capteur (19) de pression pour mesurer la pression (p) dans l'installation (2) indépendante de l'air extérieur et **en ce que** le dispositif (16) de réglage est constitué, en outre, pour modifier les interventions de réglage sur les vannes (14, 15) d'évacuation supplémentairement en fonction de valeurs de mesure du capteur (19) de pression, afin d'augmenter, ensemble avec la diminution de la quantité d'évacuation du un réactif (par exemple, H2), la quantité d'évacuation de l'autre réactif (O2), si sa concentration (c_{O2}), dans l'installation (2) indépendante de l'air extérieur, est inférieure à la valeur (OG-c_{O2}) de seuil donnée à l'avance pour lui et si la pression (p) mesurée est inférieure à une valeur (OG-p) limite donnée à l'avance.

3. Système (1) de piles à combustible suivant la revendication 2, **caractérisé en ce que** le dispositif (16) de réglage est constitué, en outre, pour continuer à modifier les interventions de réglage sur les vannes (14, 15) d'évacuation, afin d'augmenter la quantité évacuée du réactif oxygène (O2), si sa concentration (c_{O2}), dans l'installation (2) indépendante de l'air extérieur, est inférieure à une limite (UG-c_{O2}) inférieure donnée à l'avance.

4. Système (1) de piles à combustible suivant la revendication (3), **caractérisé en ce que**, en outre, la quantité d'évacuation du réactif hydrogène (H2) est diminuée.

5. Procédé pour faire fonctionner un système (1) de piles à combustible d'une installation (2) indépendante de l'air extérieur, dans lequel on alimente un certain nombre de piles (3) à combustible en les réactifs hydrogène (H2) et oxygène (O2) en deux circuits (8, 9) distincts pour du gaz, dans lesquels les réactifs (H2, O2) circulent en étant véhiculés indépendamment l'un de l'autre par des pompes (10, 11), dans lequel ils sont introduits dans les circuits (8, 9) pour du gaz par des vannes (6, 7) d'alimentation et sont sortis de ceux-ci par des vannes (14, 15) d'évacuation pour aller dans l'installation (2) indépendante de l'air extérieur, et dans lequel, au moyen d'un dispositif (16) de réglage, on effectue, en fonction de concentrations mesurées des réactifs (H2, O2) dans les circuits (8, 9) pour des gaz, des interventions de réglage sur les vannes (6, 7) d'alimentation, les vannes (14, 15) d'évacuation et les pompes (10, 11), **caractérisé en ce que** l'on mesure les concentrations des deux réactifs (H2, O2) dans l'installation (2) indépendante de l'air extérieur et on modifie les interventions de réglage sur les vannes (14, 15) d'évacuation en fonction des concentrations mesurées des deux réactifs (H2, O2) dans l'installation (2) indépendante de l'air extérieur, afin de diminuer la quantité évacuée de l'un des deux réactifs (par exemple, H2), si sa concentration (c_{H2}), dans l'installation (2) indépendante de l'air extérieur, dépasse une limite (OG-c_{H2}) supérieure donnée à l'avance, ou on diminue les quantités évacuées des deux réactifs (H2, O2), si leurs concentrations (c_{H2}, c_{O2}), dans l'installation (2) indépendante de l'air extérieur, dépassent des valeurs (OG-c_{H2}, OG-c_{O2}) limites données à l'avance.

6. Procédé suivant la revendication 5, **caractérisé en ce que** l'on mesure, en outre, la pression dans l'installation (2) indépendante de l'air extérieur et on modifie les interventions de réglage sur les vannes (14, 15) d'évacuation, en outre, en fonction de la pression (p) mesurée, afin d'augmenter, ensemble avec la diminution de la quantité évacuée de l'un des réactifs (par exemple, H2), la quantité évacuée de l'autre réactif (O2), si sa concentration (c_{O2}), dans l'installation (2) indépendante de l'air extérieur, est inférieure à la valeur (OG-c_{O2}) de seuil donnée à l'avance et si la pression (p) mesurée est inférieure à une valeur (OG-p) limite donnée à l'avance.

7. Procédé suivant la revendication 6, **caractérisé en ce que** l'on continue à modifier les interventions de réglage sur les vannes (14, 15) d'évacuation, afin d'augmenter la quantité évacuée du réactif oxygène (O2), si sa concentration (c_{O2}), dans l'installation (2) indépendante de l'air extérieur, est inférieure à une limite (UG-c_{O2}) inférieure donnée à l'avance.

8. Procédé suivant la revendication 7, **caractérisé en ce que** l'on diminue, en outre, la quantité évacuée du réactif hydrogène (H2).
